# EUROPÄISCHE PATENTANMELDUNG

(11) **EP 4 331 630 A1**
(43) Veröffentlichungstag der Anmeldung: **06.03.2024**
(21) Anmeldenummer: 23193032.2
(22) Anmeldetag: 23.08.2023
(51) Int. Cl.: A61L 2/18, A61L 2/232, D04H 1/425, B32B 5/02

(54) **DESINFEKTIONSTUCHGEBINDE**

(30) Priorität: 02.09.2022 DE 102022122316
(71) Anmelder: NITTO DENKO CORPORATION, Ibaraki-shi Osaka 567-8680 (JP); Nitto Advanced Nonwoven Ascania GmbH, 06449 Aschersleben (DE)
(72) Erfinder: Berndt, Christian, 06449 Aschersleben (DE); Trinkaus, Jan Michael, 53881 Euskirchen (DE)
(74) Vertreter: Andrejewski - Honke Patent- und Rechtsanwälte Partnerschaft mbB

(57) **Zusammenfassung**

Die Erfindung betrifft ein Desinfektionstuchgebinde mit einem eine Entnahmeöffnung (1) aufweisenden Aufnahmebehälter (2) und einer Vielzahl von in dem Aufnahmebehälter (2) angeordneten Desinfektionstüchern (4) aus Nonwoven, welche mit einer zumindest zwei flüssige Komponenten aufweisenden Desinfektionslösung getränkt sind. Erfindungsgemäß ist vorgesehen, dass das Nonwoven Lignin enthaltende Fasern aufweist und/oder die Desinfektionslösung einen Farbstoff enthält.

## Beschreibung

Die Erfindung betrifft ein Desinfektionstuchgebinde mit einem eine insbesondere verschließbare Entnahmeöffnung aufweisenden Aufnahmebehälter und einer Vielzahl von in dem Aufnahmebehälter angeordneten Desinfektionstüchern aus Nonwoven, welche mit einer zumindest zwei Flüssigkeitskomponenten aufweisenden Desinfektionslösung getränkt sind.

Für verschiedene Einrichtungen im Bereich der Gesundheitsvorsorge, Pflege, Verpflegung und Lebensmittel-Herstellung ist ein großes Maß an Hygiene wichtig, um Gefährdungen von Personen und insbesondere Erkrankungen durch Viren, Keime oder dergleichen zu vermeiden. Dabei ist es üblich, Werkzeuge, Betriebsmittel, Flächen und dergleichen mit geeigneten Mitteln zu reinigen und zu desinfizieren.

Ein besonders großes Maß an Hygiene ist beispielsweise im medizinischen Bereich in Krankenhäusern, Arztpraxen oder auch Pflegeeinrichtungen notwendig. Während medizinische Werkzeuge und Apparate teils in speziellen Sterilisatoren wie Autoklaven gereinigt und desinfiziert werden, müssen Oberflächen in Gebäuden wie Griffbereiche, Möbel und auch Hilfsmittel wie Krankenhausbetten, Rollstühle oder dergleichen oberflächlich gereinigt werden, wozu beispielsweise Desinfektionstücher eingesetzt werden können.

Desinfektionstücher sind mit einer Desinfektionslösung getränkt, welche durch eine Wischbewegung auf Oberflächen aufgebracht wird. Einerseits können durch Desinfektionstücher oberflächliche Verschmutzungen entfernt werden, wobei dann andererseits die überstrichene Oberfläche von der Desinfektionslösung zusätzlich gereinigt wird. Dabei werden insbesondere Bakterien, Viren und

Keime zumindest in einem erheblichen Maße abgetötet bzw. passiviert.

Weit verbreitet sind in der Praxis Desinfektionslösungen, welche zumindest zwei flüssige Komponenten aufweisen. Bekannt sind beispielsweise Desinfektionslösungen, welche als flüssige Komponenten Alkohol und Wasser aufweisen. Die Mischung der Komponenten wird dabei im Hinblick auf eine effiziente Desinfektionswirkung festgelegt, wobei noch weitere Zusatzstoffe wie beispielsweise ein pH-Regulator vorgesehen sein können.

Aus Sicht eines Benutzers ist klar, dass das Desinfektionstuch insgesamt zumindest feucht sein muss, um die gewünschte desinfizierende Funktion sicherzustellen. Die richtige stoffliche Zusammensetzung der Desinfektionslösung ist dabei für den Benutzer bei bekannten Desinfektionstuchgebinden nicht festzustellen.

Die bekannten Desinfektionstuchgebinde weisen einen Aufnahmebehälter auf, der eine üblicherweise verschließbare Entnahmeöffnung umfasst. Gebräuchlich sind einerseits einfache Folienverpackungen mit einem Wiederverschluss, wie diese beispielsweise in der DE 10 2007 035 501 A1 und der DE 10 2007 036 903 A1 beschrieben sind. Des Weiteren sind auch Spenderdosen bekannt, bei denen die Desinfektionstücher einzeln aus einer oberseitigen Entnahmeöffnung entnommen werden können.

Durch die Verschließbarkeit der Entnahmeöffnung kann grundsätzlich erreicht werden, dass nach einem erstmaligen Öffnen des Aufnahmebehälters eine Nutzung über einen längeren Zeitraum möglich ist. In der Praxis besteht jedoch die Gefahr, dass der Verschluss unvollständig ist, wobei dann auch die desinfizierende Funktion der Desinfektionstücher beeinträchtigt werden kann. So ist es möglich, dass eine an sich verschließbare Entnahmeöffnung bewusst oder aus Versehen nicht ordnungsgemäß verschlossen wird und/oder ein Desinfektionstuch mit seinem Ende trotz eines zumindest teilweisen Verschlusses der Entnahmeöffnung noch frei liegt.

Wenn beispielsweise mehrere Desinfektionstücher direkt nacheinander entnommen werden sollen, so muss die Entnahmeöffnung dazwischen nicht verschlossen werden. Wenn die Entnahmeöffnung über einen kurzen Zeitraum nicht verschlossen wird, ist die Funktionalität der Desinfektionstücher üblicherweise nicht beeinträchtigt.

Wenn jedoch zumindest ein Desinfektionstuch über einen längeren Zeitraum frei liegt, so können sich die flüssigen Komponenten der Desinfektionslösung verflüchtigen, wodurch dann die desinfizierende Wirkung gegebenenfalls nicht mehr erreicht werden kann.

Gerade bei den beschriebenen Desinfektionslösungen mit zumindest zwei flüssigen Komponenten ist auch zu berücksichtigen, dass sich die zumindest zwei unterschiedlichen Komponenten in der Regel unterschiedlich verflüchtigen. Wenn die Desinfektionslösung beispielsweise Alkohol und Wasser aufweist, verflüchtigt sich der Alkohol viel schneller als das Wasser, sodass sich dann das Verhältnis der Volumenanteile der beiden Komponenten kontinuierlich ändert.

Wenn der Gehalt an Alkohol einen Grenzwert unterschreitet, so ist die desinfizierende Wirkung nicht gegeben. Selbst wenn der Alkohol sich zu einem großen Teil oder vollständig verflüchtigt hat, so ist häufig das ebenfalls in der Desinfektionslösung vorgesehene Wasser noch vorhanden. Das Desinfektionstuch ist dann weiterhin feucht. Für einen Benutzer kann sich dadurch der Eindruck ergeben, dass das entsprechende Desinfektionstuch weiterhin ohne weiteres nutzbar ist, auch wenn tatsächlich die desinfizierende Wirkung teilweise oder vollständig verloren gegangen ist.

Vor diesem Hintergrund liegt der vorliegenden Erfindung die Aufgabe zugrunde, ein Desinfektionstuchgebinde anzugeben, bei dem mit einfachen Mitteln ein erhöhtes Maß an Sicherheit erreicht werden kann. Insbesondere soll ein Benutzer erkennen können, wenn bei noch feuchten Desinfektionstüchern die desinfizierenden Eigenschaften aufgrund einer Änderung der Zusammensetzung der Desinfektionslösung beeinträchtigt ist.

Gegenstand der Erfindung und Lösung der Aufgabe ist ein Desinfektionstuchgebinde gemäß Patentanspruch 1.

Ausgehend von einem gattungsgemäßen Desinfektionstuchgebinde ist vorgesehen, dass das Nonwoven Lignin enthaltende Fasern aufweist, wobei das Nonwoven zwischen 0,02 g/m² und 1 g/m² Lignin aufweist und/oder dass die Desinfektionslösung einen Farbstoff enthält.

Sowohl der Farbstoff als auch bei einem Zerfall insbesondere durch Oxidation des Lignins können an einem bereichsweise freiliegenden Desinfektionstuch markante Farbveränderungen hervorgerufen werden. Dies gilt gerade im Zusammenhang mit der erfindungsgemäß zumindest zwei flüssige Komponenten aufweisende Desinfektionslösung, wobei die zumindest zwei Komponenten in der Regel stets ein unterschiedliches Verhalten hinsichtlich der Migration und ihrer Verflüchtigung aufweisen.

Wenn beispielsweise gemäß einer bevorzugten Ausgestaltung der Erfindung die Desinfektionslösung als flüssige Komponenten Alkohol mit einem Volumenanteil zwischen 50 % und 90 %, insbesondere zwischen 55 % und 80 % und Wasser mit einem Volumenanteil zwischen 10 % und 55 %, insbesondere zwischen 20 % und 45 % aufweist, so ist der Alkohol im Vergleich zu dem Wasser leicht flüchtig und wird an der freiliegenden Stelle des Desinfektionstuchs entsprechend schnell verdampfen. Geeignete Alkohole sind beispielsweise Ethanol, 1-Propanol und 2-Propanol, welches in der Praxis auch als Isopropanol bezeichnet wird. Insbesondere kommen auch Mischungen verschiedener Alkohole in Betracht.

Wenn das Desinfektionstuch lediglich kurzfristig frei liegt, so spielt dieser Verlust an Alkohol in der Regel keine Rolle und die desinfizierende Wirkung ist noch nicht verloren gegangen. Falls dagegen ein Abschnitt des Desinfektionstuches über einen längeren Zeitraum frei liegt, so wird eine entsprechend größere Menge an Alkohol verdampfen und auch in dem Nonwoven durch die wirkenden Kapillarkräfte nachtransportiert. Es besteht somit eine erhebliche Gefahr, dass selbst bei einem kleinen freiliegenden Abschnitt lediglich eines Desinfektionstuchs nicht nur das entsprechende Desinfektionstuch selbst sondern auch angrenzende Desinfektionstücher oder der gesamte Aufnahmebehälter erhebliche Mengen der leichter flüchtigen Komponente, also insbesondere Alkohol, verlieren.

Gerade ein solcher erhöhter Transport führt aber auch dazu, dass der in der Desinfektionslösung vorhandene Farbstoff bzw. das in dem Nonwoven vorhandene Lignin oder Zersetzungsprodukte davon mit der flüchtigen Komponente zumindest teilweise transportiert wird und dann bei dem Verflüchtigen bzw. Verdampfen an der freiliegenden Stelle zurückbleibt. Entsprechend werden dann diese farbigen bzw. färbenden Bestandteile lokal in dem Material aufkonzentriert, wodurch sich eine spezifische lokale Verfärbung ergibt, die für einen Benutzer leicht wahrnehmbar ist.

Wenn beispielsweise ein entsprechendes Desinfektionstuch aus dem Aufnahmebehälter entnommen wird, setzt sich der Abschnitt mit einer erhöhten Menge an Lignin und/oder Farbstoff deutlich von dem übrigen Bereich des Desinfektionstuchs ab.

Dies gilt insbesondere, wenn der Benutzer durch erläuternde Hinweise auf die beschriebene Funktionalität zur Qualitätssicherung hingewiesen wird. Beispielsweise kann in einer Anleitung, einem Beipackzettel oder dergleichen darauf hingewiesen werden, dass bei einer sichtbaren, insbesondere lokalen Verfärbung eines Desinfektionstuchs dieses und üblicherweise auch das gesamte Desinfektionstuchgebinde nicht mehr sicher genutzt werden kann.

Gemäß einer bevorzugten Ausgestaltung der Erfindung ist vorgesehen, dass die Desinfektionslösung einen pH-Regulator aufweist. Der pH-Regulator kann dabei insbesondere dazu vorgesehen sein, um für die Desinfektionslösung einen pH-Wert von weniger als 5,8 und vorzugsweise mehr als 3,5 einzustellen.

Geeignet ist unter anderem Apfelsäure, wobei sowohl rechtsdrehende (D-) und linksdrehende (L-) Apfelsäure in Betracht kommt. Zusätzlich oder alternativ können beispielsweise auch Weinsäure, Fumarsäure, Zitronensäure oder Bernsteinsäure eingesetzt werden.

Durch einen solchen pH-Wert kann einerseits die Reinigungs- und Desinfektionswirkung in gewünschter Weise eingestellt bzw. beeinflusst werden. In dem angegebenen Wert ergibt sich auch eine geringe Belastung bei einem direkten Hautkontakt mit einem Benutzer, wenn ohne Handschuhe oder andere Schutzmaßnahmen Flächen gereinigt werden und/oder direkt die Hände desinfiziert werden sollen.

Wenn das Nonwoven gemäß einer Variante der Erfindung Lignin enthält, so führen die Zerfallsprodukte von Lignin zu einer gelben oder braunen Verfärbung. Dabei wird angenommen, dass eine Oxidation von Lignin durch eine saure Umgebung bei einem pH-Wert kleiner als 5,8 befördert wird, sodass aus dem Lignin in einem höheren Maße färbende Zersetzungsprodukte entstehen, die dann - wie bereits zuvor beschrieben - durch eine Migration einer flüssigen Komponente des Desinfektionsmittel transportiert werden und sich insbesondere dort ansammeln, wo die entsprechende Komponente sich verflüchtigt bzw. verdam pft.

Durch den beschriebenen Transport und die Ansammlung sind im Prinzip auch Fasern geeignet, welche bereits zu einem gewissen Anteil gebleicht sind und in Bezug auf die Mengenverteilung von Holz als Ausgangsprodukt nur noch einen vergleichsweise geringen Anteil an Lignin aufweisen.

Das Nonwoven kann im Rahmen der Erfindung ohne Einschränkung einschichtig oder vorzugsweise mehrschichtig gebildet sein. Jede Schicht kann dabei aus einem Fasertyp oder aus einer Fasermischung gebildet sein.

Gemäß einer bevorzugten Ausgestaltung der Erfindung ist vorgesehen, dass zumindest eine Schicht des Nonwoven einen ligninhaltigen Holzfaserwerkstoff enthält. Als Holzfaserwerkstoff kann beispielsweise Pulp vorgesehen sein, welches durch die Zerkleinerung von Holz, beispielsweise mit einer Hammermühle, gebildet wird. Der Begriff Pulp ist dabei nicht auf einen wässrigen Brei von Fasern beschränkt, sondern umfasst auch lediglich feuchte oder auch trockene Fasermassen. Der Anteil an Pulp kann in der zumindest einen Schicht mit ligninhaltigem Holzfaserstoff insbesondere in einem Bereich von 70 Gew.-% bis 100 Gew.-% liegen.

Der Pulp kann dabei gebleicht und insbesondere chlorfrei gebleicht sein, sodass im Vergleich zu Holz nur noch ein verringerter Anteil an Lignin vorhanden ist, der jedoch für den gewünschten Farbumschlag bei den beschriebenen Prozessen noch ausreichend ist.

Im Rahmen der Erfindung kann beispielsweise vorgesehen sein, dass bei einem mehrschichtigen Aufbau des Nonwovens eine Schicht vollständig oder im Wesentlichen aus Pulp gebildet ist. Aufgrund der weichen Konsistenz der Fasern kann insbesondere bei einem zumindest dreischichtigen Aufbau die Anordnung der Schicht aus Pulp als innenliegende Kernschicht vorgesehen sein.

Im Rahmen der Erfindung ist es auch möglich, dass das Nonwoven kein Lignin enthält und dann die beschriebenen färbenden Effekte ausschließlich durch den Farbstoff der Desinfektionslösung erreicht wird.

Wie nachfolgend noch weiter beschrieben, kann gerade eine Kombination von Lignin in dem Nonwoven und Farbstoff in dem Desinfektionsmittel zu einem besonders deutlichen Farbumschlag führen, weshalb eine solche Kombination im Rahmen der Erfindung besonders zweckmäßig sein kann.

Unabhängig von dem Vorhandensein von Lignin ist gemäß einer bevorzugten Ausgestaltung der Erfindung vorgesehen, dass das Nonwoven zumindest eine Schicht aus einer Naturfaser oder einem pflanzenbasierten Material aufweist. Als pflanzenbasiertes Material kommt beispielsweise regenerierte Zellulose, insbesondere in Form von Viskose, in Betracht, welches durch chemische Prozesse aus zellulosehaltigen Rohstoffen wie beispielsweise Holz gewonnen werden kann. Im Gegensatz zu Pulp ist dabei jedoch eine stoffliche Verarbeitung bzw. Umsetzung vorgesehen, wobei Viskosefasern beispielsweise in einem Nassspinnverfahren in Form von Filamenten ersponnen werden können.

Beispielsweise kann zumindest eine Viskosefasern enthaltenden Schicht vorgesehen sein, welche zu 70 Gew.-% bis 100 Gew.-% aus Viskosefasern, insbesondere Viskosestapelfasern besteht

Gemäß einer besonders bevorzugten Ausgestaltung der Erfindung ist vorgesehen, dass das Nonwoven vollständig aus biologisch abbaubaren, pflanzenbasierten Materialien gebildet ist.

Wenn beispielsweise das Nonwoven lediglich Schichten aus Viskose und/oder Pulp aufweist, so ist das Material sowohl thermisch verwertbar als auch biologisch abbaubar, insbesondere kompostierbar und verrottbar.

Bei dem Einsatz der Desinfektionstücher im medizinischen Bereich sind dabei jedoch selbstverständlich bei einem Desinfektionsprozess aufgenommene Viren, Erreger, Bakterien oder dergleichen zu beachten, welche häufig auch bei der weiteren Handhabung der Desinfektionstücher im Rahmen einer Entsorgung nicht unkontrolliert freigesetzt werden dürfen.

Geeignet ist beispielsweise ein dreischichtiger Aufbau, wobei eine Kernschicht aus Pulp zwischen Außenschichten aus Viskose angeordnet ist.

Die Viskosefasern können beispielsweise mit einem Kardierprozess abgelegt werden, wobei die Ablage von Pulp beispielsweise durch einen Luftstrom oder aus einer wässrigen Suspension erfolgen kann. Optional kann das Nonwoven bei seiner Fertigung beispielsweise durch Wasserstrahlen verfestigt und anschließend getrocknet werden.

Das Nonwoven weist gemäß einer bevorzugten Ausgestaltung ein Flächengewicht zwischen 25 g/m² und 80 g/m² auf.

Sofern als färbende Substanz bzw. Vorprodukt für eine färbende Substanz Lignin vorgesehen ist, weist das Nonwoven zwischen 0,02 g/m² und 1 g/m², vorzugsweise zwischen 0,05 g/m² und 0,2 g/m², besonders bevorzugt zwischen 0,07 g/m² und 0,14 g/m² Lignin auf. Wie bereits zuvor erläutert, kann Pulp oder ein alternatives Lignin enthaltendes Fasermaterial bereits in einem gewissen Maße gebleicht sein. Dabei ist es üblich, dass der Lignin-Anteil auch anhand einer Kappa-Zahl gemäß ISO 302:2015 bestimmt wird.

Zusätzlich oder alternativ ist gemäß einer bevorzugten Ausgestaltung der Erfindung vorgesehen, dass die Desinfektionslösung beispielsweise zwischen 0,01 mg/l (Milligramm pro Liter) und 2 mg/l, vorzugsweise zwischen 0,02 mg/l und 1 mg/l, besonders bevorzugt zwischen 0,1 mg/l und 0,5 mg/l Farbstoff enthält. Geeignet sind insbesondere Lebensmittelfarbstoffe, natürliche Farbstoffe und naturidentische Farbstoffe welche in der Regel für einen Benutzer und die Umgebung unschädlich sind. Dabei ist zu beachten, dass natürliche Farbstoffe und naturidentische Farbstoffe häufig als Lebensmittelfarbstoff klassifiziert sind.

Der Farbstoff wird in einer Menge eingesetzt, dass an gereinigten Flächen keine oder zumindest keine wesentliche Einfärbung feststellbar ist. Durch die Migration des Farbstoffes bei einer Verflüchtigung einer der zumindest zwei flüssigen Komponenten der Desinfektionslösung kann der Farbstoff sich dann jedoch dort anreichern, wo die entsprechende Komponente verdampft, sodass lokal eine wahrnehmbare Farbveränderung auftritt. Geeignet sind beispielsweise synthetisch hergestellte Lebensmittel-Farbstoffe wie Patentblau V und Chinolingelb.

Des Weiteren kommen natürliche oder naturidentische Farbstoffe, welche selbst auch als Lebensmittelfarbstoff klassifiziert sein können, in Betracht. Je nach Zusammensetzung der Desinfektionslösung ist die Löslichkeit des Farbstoffes zu berücksichtigen. Bei einer aus Wasser und Alkohol gebildeten Desinfektionslösung sind in der Regel wasserlösliche Farbstoffe wie Chlorophylle, Anthocyane, Flavone und Betalaine geeignet.

Chlorophyll, auch Blattgrün genannt, bezeichnet eine Klasse natürlicher Farbstoffe, die von Organismen gebildet werden, welche Photosynthese betreiben. Anthocyane sind wasserlösliche Pflanzenfarbstoffe, die im Zellsaft nahezu aller höheren Pflanzen vorkommen und Blüten und Früchten eine intensive rote, violette oder blaue Färbung verleihen. Natürliche Quellen für Anthocyane sind beispielsweise Holunderbeeren, Rotkohl, Heidelbeeren, Brombeeren, Schwarze Johannisbeeren, blaue Weintrauben, Ligusterbeeren, Stockrosen und Klatschmohn. Flavone weisen eine gelbe bis orange hellbraune Farbe auf und können beispielsweise aus Küchenzwiebel, Birke, Hopfen, Wau, Salbei und Goldrute gewonnen werden. Betalaine können insbesondere aus roten Rüben wie beispielsweise Rote Bete gewonnen werden. Je nach Zusammensetzung der Desinfektionslösung können gegebenenfalls auch nicht wasserlösliche natürliche Farbstoffe wie Carotinoide in Erwägung gezogen werden.

Bei den genannten natürlichen Farbstoffen ist zu beachten, dass diese aus natürlichen Produkten gewonnenen Substanzen zusätzlich zu ihrer färbenden Wirkung weitere spezifische Eigenschaften aufweisen können. Es versteht sich, dass bevorzugt natürlich Farbstoffe eingesetzt werden, welche physiologisch unbedenklich sind. Des Weiteren können natürliche Farbstoffe auch in Rahmen der Erfindung weiter förderliche Eigenschaften wie beispielsweise eine desinfizierende Wirkung aufweisen.

In bekannter Weise kann der Aufnahmebehälter als wiederverschließbare Folienverpackung oder als Spenderdose gebildet sein.

Der Aufnahmebehälter nimmt in seinem Auslieferungszustand beispielsweise zwischen einschließlich 50 und 200 Desinfektionstücher, insbesondere zwischen 60 und 120 Desinfektionstücher auf. Dabei ist zu beachten, dass der Aufnahmebehälter einerseits handlich und kompakt sein soll, andererseits für übliche Aufgaben eine geeignete Menge an Desinfektionstüchern bereithalten muss. Gerade im Rahmen der Erfindung ist auch zu berücksichtigen, dass bei dem zuvor beschriebenen Farbumschlag im Zweifelsfall das gesamte Desinfektionstuchgebinde nicht mehr genutzt werden darf.

Gemäß einer bevorzugten Ausgestaltung der Erfindung ist vorgesehen, dass die Desinfektionstücher in dem Aufnahmebehälter aneinander anliegen und/oder ineinander gefaltet sind und/oder voneinander trennbar als Strang aneinander anschließen.

Bei einem Strang können die Desinfektionstücher beispielsweise durch eine Perforation verbunden sein, welche dann bei einem Herausziehen einzelner Desinfektionstücher aus dem Aufnahmebehälter an der Entnahmeöffnung per Hand getrennt werden oder selbsttätig auseinanderreißen. Der Strang kann dabei in dem Aufnahmebehälter als eine Rolle angeordnet sein. Eine solche Ausgestaltung ist insbesondere im Zusammenhang mit einer Spenderdose als Aufnahmebehälter besonders geeignet.

Bei der Anordnung in einer Folienverpackung sind die Desinfektionstücher üblicherweise auch gefaltet. Die Desinfektionstücher können dabei als einfacher Stapel übereinanderliegen. Vorzugsweise ist jedoch vorgesehen, dass die aufeinanderfolgenden Desinfektionstücher ineinander gefaltet sind, sodass bei der Entnahme eines Desinfektionstuchs auch das nachfolgende Desinfektionstuch bereits in Richtung der Entnahmeöffnung bewegt wird. Das nachfolgende Desinfektionstuch kann dann besonders leicht und zuverlässig gegriffen werden.

Als Nachteil kann sich jedoch ergeben, dass bei einem zu weiten versehentlichen Herausziehen des nachfolgenden Desinfektionstuchs ein ordnungsgemäßer Verschluss der Entnahmeöffnung nicht mehr möglich oder zumindest beeinträchtigt ist und sodann über einen längeren Zeitraum in der beschriebenen Weise eine der zumindest zwei Flüssigkeitskomponenten verloren geht. Eine solche Situation kann dann im Rahmen der Erfindung zuverlässig festgestellt werden.

Die Erfindung wird nachfolgend anhand eines Ausführungsbeispiels erläutert.
- Figur 1: ein erfindungsgemäßes Desinfektionstuchgebinde,
- Figur 2: eine alternative Ausgestaltung des Desinfektionstuchgebindes,
- Figur 3: Verfahrensschritte zur Herstellung eines Nonwovens für Desinfektionstücher,

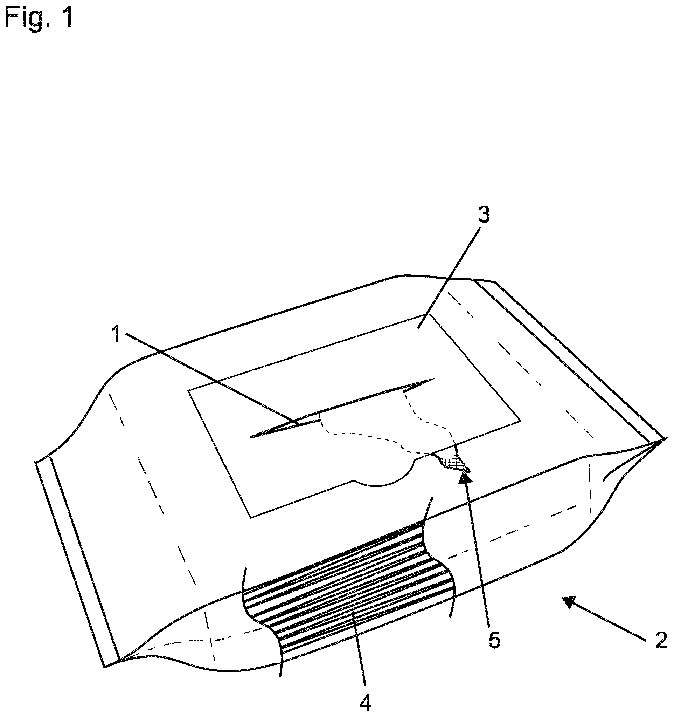

Die Figur 1 zeigt ein Desinfektionstuchgebinde mit einem eine Aufnahmeöffnung 1 aufweisenden Aufnahmebehälter 2 in Form einer Folienverpackung. Zum Verschließen der Aufnahmeöffnung 1 ist ein selbstklebender Folienzettel 3 vorgesehen.

In dem Aufnahmebehälter 2 ist eine Vielzahl von beispielsweise 60 oder 80 Desinfektionstüchern 4 aus Nonwoven angeordnet. Die Desinfektionstücher 4 sind in bekannter Weise ineinander gefaltet, sodass bei dem Herausziehen eines Desinfektionstuchs 4 bereits das nächste in Richtung der Entnahmeöffnung 1 gezogen wird.

Die Desinfektionstücher 4 sind mit einer zwei flüssige Komponenten aufweisenden Desinfektionslösung getränkt. Die Desinfektionslösung kann beispielsweise als flüssige Komponenten Alkohol mit einem Volumenanteil zwischen 50 % und 90 % und Wasser mit einem Volumenanteil zwischen 10 % und 50 % aufweisen, wobei dann, wie nachfolgend noch erläutert, einzelne Zusatzstoffe in geringem Maße vorgesehen sein können. Geeignete Alkohole sind beispielsweise Ethanol, 1-Propanol und 2-Propanol, welches in der Praxis auch als Isopropanol bezeichnet wird. Insbesondere kommen auch Mischungen verschiedener Alkohole in Betracht.

Als weitere Bestandteile weist die Desinfektionslösung einen pH-Regulator wie beispielsweise Apfelsäure auf, welcher einen pH-Wert unter 5,8 und beispielsweise zwischen 3,5 und 5,8 einstellt.

Schließlich ist auch ein Lebensmittel-Farbstoff insbesondere mit einer Menge von 0,02 mg/l bis 1 mg/l beigegeben. Geeignet sind beispielsweise die Lebensmittelfarbstoffe Chinolingelb und Patentblau V.

Gemäß einem konkreten Ausführungsbeispiel kann die Desinfektionslösung beispielsweise 27 Vol.-% Ethanol, 36 Vol.-% Isopropanol, 36 Vol.-% Wasser, 1 % pH-Regulator in Form von Apfelsäure und die angegebenen Mengen an Farbstoff enthalten.

Des Weiteren ist vorgesehen, dass das Nonwoven Lignin enthaltende Fasern aufweist. Das Nonwoven kann insbesondere aus biologisch abbaubaren, pflanzenbasierten Materialien gebildet sein und ein Flächengewicht zwischen 25 g/m² und 80 g/m² aufweisen. Der Ligningehalt liegt dabei beispielsweise zwischen 0,05 g/m² und 0,2 g/m².

Die Tabelle 1 zeigt einen konkreten Aufbau eines geeigneten Nonwoven-Materials

| Funktion | Flächenqewicht | Technologie | Zusammensetzun g der Fasern | Faserlänge | Faserfeinheit / Faserdurchmesser |
|---|---|---|---|---|---|
| erste Außenschicht | 18 g/m² | carded | 100% Viskose | 38 mm | 1,7 dtex |
| Kernschicht | 20 g/m² | airlaid | 100% Pulp | 2,9 mm | 24 mg/100m |
| zweite Außenschicht | 12 g/m² | carded | 100% Viskose | 38 mm | 1,7 dtex |

Gemäß der Fig. 1 ist bereits eines der ursprünglich enthaltenen Desinfektionstücher 4 entnommen, wobei ein weiteres Desinfektionstuch 4 soweit aus der Entnahmeöffnung 1 herausgezogen ist, dass dieses seitlich über den Folienzettel 3 vorsteht und somit an einem freiliegenden Ende 5 nicht abgedeckt ist.

Der in dem Ausführungsbeispiel von Ethanol und Isopropanol gebildete Alkohol als flüssige Komponente ist gegenüber Wasser als weitere Komponente leicht flüchtig und verdampft an dem freiliegenden Ende 5. Dabei ist zu beachten, dass durch die Kapillarkräfte bzw. durch Diffusion innerhalb der Desinfektionstücher 4 gerade der schnell verdampfende Alkohol kontinuierlich nachgefördert wird.

Dies gilt nicht nur für das oberste Desinfektionstuch 4, welches mit dem freiliegenden Ende 5 aus dem Aufnahmebehälter 2 heraussteht, sondern auch für die darunterliegenden Desinfektionstücher 4, die alle in einem direkten Kontakt stehen.

Gerade über einen längeren Zeitraum können somit große Mengen an Alkohol verdampfen, sodass insgesamt die gewünschte desinfizierende Wirkung nicht mehr sicher gegeben ist. Aufgrund der weniger leicht flüchtigen Komponente ist es dann möglich, dass auch das oberste Desinfektionstuch 4 an dem freiliegenden Ende 5 noch feucht ist. Allerdings wird dort ein klar wahrnehmbarer Farbumschlag beobachtet.

Dieser ist darauf zurückzuführen, dass mit dem aus dem Inneren des Aufnahmebehälters 2 nach außen geförderten Alkohol Lignin bzw. färbende Oxidationsprodukte von Lignin und der in der Desinfektionslösung enthaltene Farbstoff zu dem freien Ende 5 transportiert werden und dort bei einem Verdampfen des Alkohols zurückbleiben. Genau an dem freiliegenden Ende wird somit eine Ansammlung von Lignin bzw. färbenden Zerfallsprodukten sowie von dem Farbstoff beobachtet.

Durch die Farbveränderung wird einem Benutzer angezeigt, dass das gesamte Desinfektionstuchgebinde nicht mehr zuverlässig genutzt werden kann, weil sich die Zusammenstellung der Desinfektionslösung insgesamt wesentlich verändert hat.

Der Benutzer kann durch entsprechende Hinweise auf dem Aufnahmebehälter 2, eine Anleitung oder einen Beipackzettel auf die erläuterte Funktionalität hingewiesen werden.

Im Vergleich zu einem Desinfektionstuchgebinde gemäß dem Stand der Technik ergibt sich ein erhöhtes Maß an Sicherheit. Gerade weil auch das freiliegende Ende 5 aufgrund des weniger schnell flüchtigen Wassers noch feucht sein kann, ist ohne den beschriebenen Farbumschlag für einen Benutzer bei einem Desinfektionstuchgebinde nach dem Stand der Technik nicht feststellbar, ob das Desinfektionstuchgebinde insgesamt noch genutzt werden kann.

Wenn dagegen kein Farbumschlag vorhanden ist, erkennt ein Benutzer, dass der Überstand des obersten Desinfektionstuchs 4 mit dem freiliegenden Ende 5 noch nicht zu einer Beeinträchtigung des gesamten Desinfektionstuchgebindes geführt hat. Der Benutzer kann dann schließen, dass an dem freiliegenden Ende 5 noch nicht so lange Alkohol als leichter flüchtige Komponente abgegeben wurde, dass die Zusammensetzung der Desinfektionslösung wesentlich verändert ist.

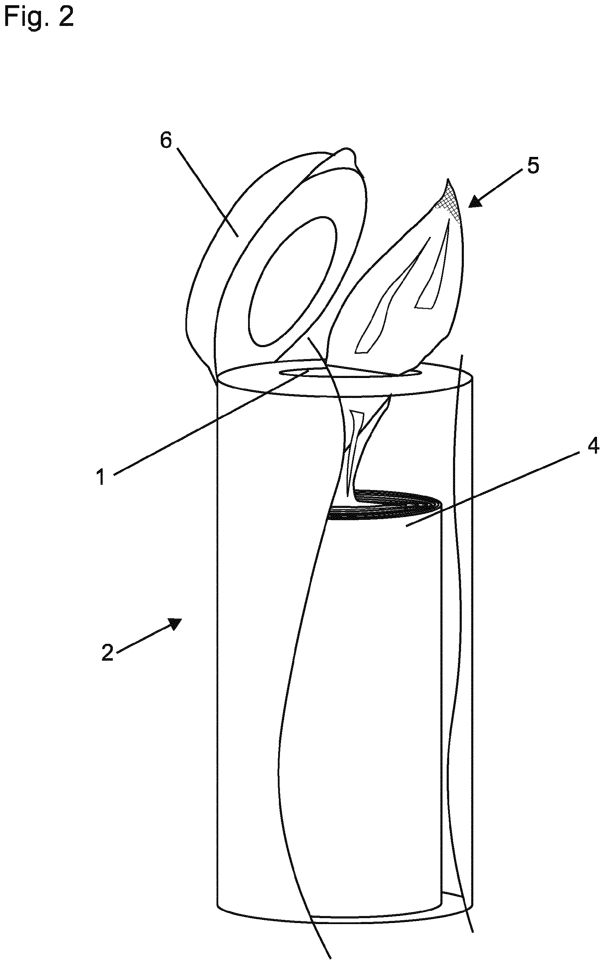

Die Fig. 2 zeigt eine alternative Ausgestaltung des Desinfektionstuchgebindes, wobei als Aufnahmebehälter 2 eine Spenderdose vorgesehen ist. Die Entnahmeöffnung 1 kann mit einem Deckel 6 verschlossen werden. Die Fig. 2 zeigt eine Ausgestaltung, bei der der Deckel 6 nicht ordnungsgemäß geschlossen ist, wobei auch hier das oberste Desinfektionstuch 4 mit dem freiliegenden Ende 5 aus der Entnahmeöffnung 1 vorsteht und dort eine wesentliche Farbveränderung erkennbar ist. Auch hier wird dem Benutzer angezeigt, dass das gesamte Desinfektionsgebinde nicht mehr sicher genutzt werden kann.

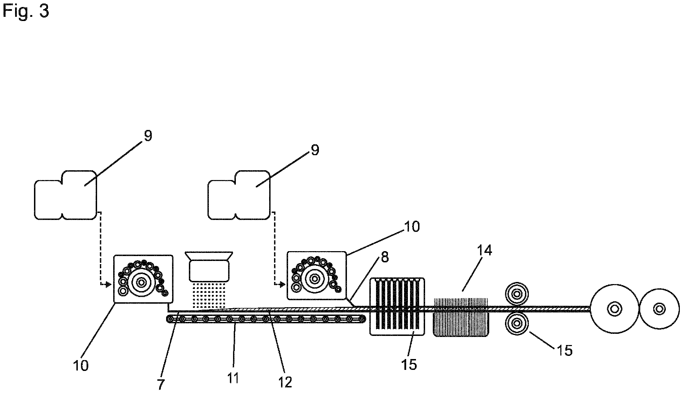

Die Fig. 3 zeigt ein Verfahren zur Herstellung des Nonwovens, aus dem die Desinfektionstücher 4 gebildet sind. Für eine erste Außenschicht 7 und eine zweite Außenschicht 8 werden jeweils Viskosefasern als Ballen 9 bereitgestellt und dann einer Karde 10 zugeführt.

Von einer Karde 10 wird zunächst die erste Außenschicht 9 auf ein Band 11 abgelegt, bevor eine Kernschicht 12 aus Pulp in einem Luftstrom aufgelegt wird. Sodann wird die Kernschicht 12 mit der zweiten Außenschicht 8 abgedeckt, bevor die Materialbahn dann einer Einrichtung 13 zum Verfestigen mittels Wasserstrahl und einer Trocknungseinrichtung 14 zugeführt wird.

Ein exemplarisch dargestellter Kalander 15 für eine thermische Verfestigung ist lediglich optional. Abschließend kann die Materialbahn aufgewickelt und nachfolgend weiterverarbeitet werden.

## Patentansprüche

1. Desinfektionstuchgebinde mit einem eine Entnahmeöffnung (1) aufweisenden Aufnahmebehälter (2) und einer Vielzahl von in dem Aufnahmebehälter (2) angeordneten Desinfektionstüchern (4) aus Nonwoven, welche mit einer zumindest zwei flüssige Komponenten aufweisenden Desinfektionslösung getränkt sind, **dadurch gekennzeichnet, dass** das Nonwoven Lignin enthaltende Fasern aufweist, wobei das Nonwoven zwischen 0,02 g/m² und 1 g/m² Lignin aufweist und/oder dass die Desinfektionslösung einen Farbstoff enthält.

2. Desinfektionstuchgebinde nach Anspruch 1, **dadurch gekennzeichnet, dass** die Desinfektionslösung als flüssige Komponenten Alkohol mit einem Volumenanteil zwischen 50% und 90% und Wasser mit einem Volumenanteil zwischen 10% und 50% aufweist.

3. Desinfektionstuchgebinde nach Anspruch 1 oder 2, **dadurch gekennzeichnet, dass** die Desinfektionslösung ein pH-Regulator aufweist und dass die Desinfektionslösung einen pH-Wert zwischen 3,5 und 5,8 aufweist.

4. Desinfektionstuchgebinde nach einem der Ansprüche 1 bis 3, **dadurch gekennzeichnet, dass** zumindest eine Schicht des Nonwoven einen ligninhaltigen Holzfaserstoff enthält.

5. Desinfektionstuchgebinde nach Anspruch 4, **dadurch gekennzeichnet, dass** die zumindest eine Schicht des Nonwoven mit ligninhaltigem Holzfaserstoff zu 70 Gew.-% bis 100 Gew.-% aus Pulp besteht.

6. Desinfektionstuchgebinde nach einem der Ansprüche 1 bis 5, **dadurch gekennzeichnet, dass** das Nonwoven einen mehrschichtigen Aufbau mit zumindest einer Fasern aus regenerierte Zellulose, insbesondere Viskosefasern, enthaltenden Schicht aufweist.

7. Desinfektionstuchgebinde nach Anspruch 6, **dadurch gekennzeichnet, dass** die zumindest eine Viskosefasern enthaltenden Schicht zum 70 Gew.-% bis 100 Gew.-% aus Viskosefasern, insbesondere Viskosestapelfasern besteht.

8. Desinfektionstuchgebinde nach einem der Ansprüche 1 bis 7, **dadurch gekennzeichnet, dass** das Nonwoven dreilagig ausgestaltet ist.

9. Desinfektionstuchgebinde nach einem der Ansprüche 1 bis 8, **dadurch gekennzeichnet, dass** das Nonwoven vollständig aus biologisch abbaubarem, pflanzenbasiertem Material gebildet ist.

10. Desinfektionstuchgebinde nach einem der Ansprüche 1 bis 9, **dadurch gekennzeichnet, dass** das Nonwoven ein Flächengewicht zwischen 25 g/m² und 80 g/m² aufweist.

11. Desinfektionstuchgebinde nach einem der Ansprüche 1 bis 10, **dadurch gekennzeichnet, dass** das Nonwoven zwischen 0,05 g/m² und 0,2 g/m² Lignin aufweist.

12. Desinfektionstuchgebinde nach einem der Ansprüche 1 bis 11, **dadurch gekennzeichnet, dass** die Desinfektionslösung zwischen 0,02 mg/l und 1 mg/l Farbstoff enthält.

13. Desinfektionstuchgebinde nach einem der Ansprüche 1 bis 12, **dadurch gekennzeichnet, dass** der Farbstoff zugeordnet ist zu zumindest einer Gruppe ausgewählt aus Lebensmittelfarbstoffe, natürliche Farbstoffe und naturidentische Farbstoffe.

14. Desinfektionstuchgebinde nach einem der Ansprüche 1 bis 13, **dadurch gekennzeichnet, dass** der Aufnahmebehälter (2) als wiederverschließbare Folienverpackung oder als Spenderdose gebildet ist.

15. Desinfektionstuchgebinde nach einem der Ansprüche 1 bis 14, **dadurch gekennzeichnet, dass** der Aufnahmebehälter (2) zwischen 50 und 200 Desinfektionstücher (4) aufnimmt.

16. Desinfektionstuchgebinde nach einem der Ansprüche 1 bis 15, **dadurch gekennzeichnet, dass** die Desinfektionstücher (4) in dem Aufnahmebehälter (2) aneinander anliegen und/oder ineinander gefaltet sind und/oder voneinander trennbar als Strang aneinander anschließen.
